## Europäisches Patentamt
## European Patent Office
## Office européen des brevets

(19)

(11) Veröffentlichungsnummer : **0 086 885**
**B1**

(12)

# EUROPÄISCHE PATENTSCHRIFT

(45) Veröffentlichungstag der Patentschrift :
**25.03.87**

(51) Int. Cl.⁴ : **F 16 H 25/20**

(21) Anmeldenummer : **82111370.1**

(22) Anmeldetag : **08.12.82**

(54) **Mechanische Lineareinheit.**

(30) Priorität : **13.02.82 DE 3205143**

(43) Veröffentlichungstag der Anmeldung :
**31.08.83 Patentblatt 83/35**

(45) Bekanntmachung des Hinweises auf die Patenterteilung : **25.03.87 Patentblatt 87/13**

(84) Benannte Vertragsstaaten :
**AT BE CH FR GB IT LI LU NL SE**

(56) Entgegenhaltungen :
**EP-A- 0 033 541**
**EP-A- 0 068 088**
**DE-A- 2 943 506**
**FR-A- 1 577 144**
**US-A- 3 106 854**
**US-A- 3 858 452**
**TECHNISCHE RUNDSCHAU, Band 67, Nr. 2, 14. Januar 1975, Seiten 19,21, Hallwag Verlag, Bern, CH M. WYSSMANN: "Motorspindeln. Elektromechanische Zug- und Druckaggregate"**

(73) Patentinhaber : **PROMA Produkt- und Marketing Gesellschaft m.b.H.**
**Beethovenstrasse 75**
**D-7310 Plochingen (DE)**

(72) Erfinder : **Lipinski, Reinhard**
**Ernst-Sachs-Strasse 21**
**D-7310 Plochingen (DE)**
Erfinder : **Neff, Karl**
**Schillerstrasse 10**
**D-7035 Waldenbuch (DE)**

(74) Vertreter : **Rüger, Rudolf, Dr.-Ing.**
**Webergasse 3 Postfach 348**
**D-7300 Esslingen/Neckar (DE)**

## Beschreibung

Die Erfindung betrifft eine mechanische Lineareinheit zur Erzeugung einer begrenzten Linearbewegung eines angetriebenen Kraftübertragungselementes.

In der Praxis sind pneumatische und hydraulische Linearelemente in einer Reihe von Ausführungsformen bekannt (vergl. bspw. DE-A-29 08 605, EP-A-0033 541). Sie bestehen in der Regel aus einem längsgeschlitzten Rohr, in dem ein durch das Arbeitsmedium verschiebbarer Zylinder verschieblich gelagert ist, der mit einem durch den Längsschlitz des Zylinderrohres nach außen ragenden Kraftübertragungselement verbunden ist, das seinerseits zur Kupplung mit einem anzutreibenden Gerät oder Element eingerichtet ist. Der Längsschlitz des Zylinderrohres ist beidseitig des Kraftübertragungselementes abgedichtet, um einen Austritt des Arbeitsmediums aus dem Zylinder zu verhüten.

Diese Lineareinheiten erfordern aber eine pneumatische oder hydraulische Druckmittelquelle, die nicht immer ohne weiteres zur Verfügung gestellt werden kann. Auch ist eine exakte wegabhängige Verstellung des Kraftübertragungselementes nicht ohne weiteres möglich, d. h. es sind zusätzliche Maßnahmen, wie Anschläge und dergl., erforderlich, wenn eine bestimmte Stellung des Kraftübertragungselementes bezüglich des Gehäuses angesteuert werden soll, wie dies bei Stellantrieben und dergl. gelegentlich erforderlich ist.

Eine exakte wegabhängige Verstellung des Kraftübertragungselementes gestattet dagegen eine mechanische Lineareinheit, von der die Erfindung ausgeht und die in der FR-A-1577 144 beschrieben ist. Bei dieser Lineareinheit ist in dem in Gestalt eines Profilrohres ausgebildeten, formstabilen, länglichen Gehäuse ein Spindeltrieb angeordnet, dessen Gewindespindel in dem Gehäuse drehbar gelagert und mit einer Antriebswelle kuppelbar ist. Das durch wenigstens eine Spindelmutter des Spindeltriebes angetriebene Kraftübertragungselement ist durch einen Längsschlitz des Gehäuses nach außen ragend angeordnet und an dem Gehäuse längsgeführt, wobei das Gehäuse endseitig durch angesetzte Lagerflansche abgeschlossen ist, in denen Lager für die Gewindespindel angeordnet sind.

Bei dieser von dem Spindeltrieb und dem formstabilen Gehäuse gebildeten Baueinheit, die gegebenenfalls auch die Antriebsquelle mit umfassen kann, ist das Betätigungselement in jeder Stellung über den Spindeltrieb ortsfest formschlüssig verriegelt.

Der Spindeltrieb ist zwar durch das Gehäuse gegen Beeinträchtigungen weitgehend geschützt, doch kann nicht ausgeschlossen werden, daß über den stets offenen Längsschlitz Verunreinigungen in das Gehäuse eindringen oder Schmiermittel aus diesem austritt.

Aufgabe der Erfindung ist es deshalb, eine mechanische Lineareinheit dieser Art zu schaffen, die insbesondere zum Einsatz in einer schmutz- oder spritzwassergefährdeten Umgebung oder unter Betriebsbedingungen geeignet ist, bei denen es darauf ankommt, auch bei ungünstiger Einbaulage das Austreten von Schmiermittel zu verhüten.

Zur Lösung dieser Aufgabe ist die Lineareinheit erfindungsgemäß dadurch gekennzeichnet, daß der Längsschlitz des Gehäuses beidseitig des Kraftübertragungselementes durch ein den Längsschlitz des Gehäuses abdeckendes flexibles Abdeckband verschlossen ist, das endseitig gegenüber dem Gehäuse fixiert ist und wenigstens einen in den Längsschlitz eingreifenden leistenartigen Halterungsansatz aufweist und daß das Kraftübertragungselement oder ein mit diesem verbundenes Teil eine das Abdeckband über einen begrenzten Längsbereich mit seinem Halterungsansatz aus dem Längsschlitz aushebende und das ausgehobene Abdeckband vor bzw. hinter diesem Längsbereich mit seinem Halterungsansatz in den Längsschlitz eindrückende Schiebereinrichtung aufweist.

Die Schiebereinrichtung kann eine das Abdeckband aus dem Längsschlitz aushebende, beidenends rampenartig ausgebildete Steuerfläche aufweisen, auf der das Abdeckband in dem Längsbereich aufliegt, wobei beiderseits der Steuerfläche zwei auf das Abdeckband einwirkende Niederhalter angeordnet sind, die das ausgehobene Abdeckband mit seinem Halterungsansatz wieder in den Längsschlitz eindrücken. Um den Schiebewiderstand des Kraftübertragungselementes zu verringern und um das Abdeckband zu schonen kann es zweckmäßig sein, daß die Niederhalter auf das Abdeckband einwirkende Rollen aufweisen. Ansonsten können die Niederhalter in Gestalt starrer Niederhalterfinger ausgebildet sein, die mit dem Kraftübertragungselement verbunden sind.

Ein praktisch vollständig geschlossener Aufbau der Lineareinheit ergibt sich, wenn die Steuerfläche in einer das Kraftübertragungselement durchdringenden, außerhalb des Gehäuses liegenden Ausnehmung ausgebildet ist, in der der ausgehobene Teil des Abdeckbandes selbst allseitig abgedeckt ist.

Das Halterungselement des Abdeckbandes kann angeformte leistenartige und mit dem Gehäuse im Bereiche des Längsschlitzes zusammenwirkende Rastelemente tragen, um damit eine sichere Verankerung des Abdeckbandes in dem Längsschlitz zu gewährleisten. Um die Querelastizität des Halterungselementes zu erhöhen hat es sich als vorteilhaft erwiesen, wenn dieses zwei im Abstand angeordnete parallele Halterungsleisten aufweist, die in unmittelbarer Nähe der Längsschlitzberandung verlaufend angeordnet sind.

Die Führung des Kraftübertragungselementes an dem Gehäuse kann grundsätzlich entsprechend den Erfordernissen des jeweiligen Einsatzzweckes ausgebildet sein. Bei einer bevorzugten Ausbildung trägt das Gehäuse zu beiden Seiten des Längsschlitzes auf seiner Außenseite wenigstens zwei parallele Führungsbahnen, wobei das Kraftübertragungselement ein das Gehäuse bis auf die Höhe der Führungsbahnen übergreifendes bügelartiges Führungsteil aufweist, das seitlich gegen die Führungsbahnen abgestützt ist. Um die Stabilität der Abstützung des Kraftübertragungselementes gegenüber dem Gehäuse zu erhöhen, kann das Gehäuse auf seiner Außenseite auf der dem Längsschlitz abgewandten Seite einer die Gewindespindelachse enthaltenden Ebene liegende Führungsbahnen tragen, die somit in einem größeren Abstand von dem Längsschlitz liegen und damit günstigere Abstützungsverhältnisse bieten.

Das Kraftübertragungselement selbst kann mit der Spindelmutter des Spindeltriebes starr verbunden oder als Teil von dieser einstückig an dieser angeformt sein. Die Anordnung kann aber auch derart getroffen werden, daß das an dem Gehäuse geführte Kraftübertragungselement zwischen zwei Gewindemittern des Spindeltriebes eingespannt ist, womit auf eine eigene Verschraubung oder dergl. des Kraftübertragungselementes mit den Spindelmuttern gegebenenfalls verzichtet werden kann.

In der Zeichnung ist ein Ausführungsbeispiel des Gegenstandes der Erfindung dargestellt.

Es zeigen :

Figur 1 eine Lineareinheit gemäß der Erfindung, im axialen Schnitt, in einer Seitenansicht,

Figur 2 die Lineareinheit nach Fig. 1, geschnitten längs der Linie II-II der Fig. 1, in einer Seitenansicht, und

Figur 3 das Gehäuse im Bereiche des Längsschlitzes und das Abdeckband der Lineareinheit nach Fig. 1 im Querschnitt und in einer perspektivischen Teildarstellung, in einem anderen Maßstab.

Die mechanische Lineareinheit weist ein längliches Gehäuse 1 in Gestalt eines Profilrohres auf, das endseitig durch zwei aufgesetzte Lagerflansche 2 verschlossen ist, die mittels Schrauben 3 mit dem Gehäuse 1 verbunden sind. In dem Gehäuse 1 ist ein Spindeltrieb angeordnet, der aus einer Gewindespindel 4 und zwei Spindelmuttern 5,6 besteht. Die Gewindespindel 4, die auch als Kugelumlaufspindel ausgebildet sein kann, ist mittels zylindrischer Lagerzapfen 7 in Wälzlagern 8 gelagert, die ihrerseits jeweils in einer entsprechenden Lagerbohrung der beiden Lagerflansche 2 angeordnet sind. Wenigstens einer der Lagerzapfen 7 ragt über den zugeordneten Lagerflansch 2 vor ; er ist dazu eingerichtet, mit einem auf den zugeordneten Lagerflansch 2 aufgesetzten Elektromotor gekuppelt zu werden, welcher im einzelnen in der Zeichnung nicht veranschaulicht ist.

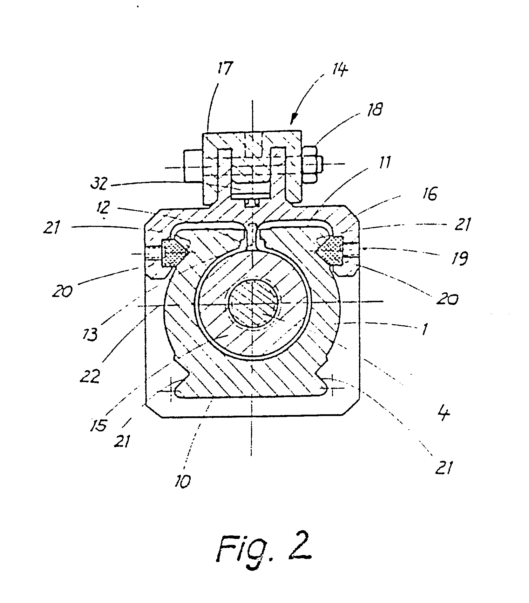

Das Gehäuse 1, das außen mit zwei parallelen, ebenen Flächen 10, 11 (Fig. 2) ausgebildet ist, ist im Bereiche der einen ebenen Fläche 11 mit einem durchgehenden Längsschlitz 12 versehen, durch den ein stegartiges Teil 13 eines Kraftübertragungselementes 14 von dem Gehäuseinnenraum nach außen ragt. Das stegartige Teil 13 geht in ein angeformtes, die Gewindespindel 4 umschließendes Auge 15 über, das zwischen den beiden Spindelmuttern 5, 6 axial verklemmt ist, womit einerseits eine kraftschlüssige Kupplung mit den Spindeltrieb gegeben ist und andererseits die beiden Spindelmuttern 5, 6 gegeneinander verspannt sind.

Auf der anderen Seite ist das stegartige Teil 13 mit einem das Gehäuse 1 von oben her teilweise umgreifenden bügelartigen Führungsteil 16 verbunden, an dem ein zum Anschluß eines nicht weiter dargestellten anzutreibenden Elementes dienendes Kupplungsteil 17 mittels einer Schraube 18 befestigt ist. Das Führungsteil 16 trägt zwei über Stellschrauben 19 nachstellbare, prismatische Führungsleisten 20, die parallel zueinander ausgerichtet sind und in entsprechende parallele und beidseitig des Längsschlitzes 12 angeordnete Führungsbahnen 21 auf der Außenseite des Gehäuses 1 eingreifen.

Das durch die beiden Spindelmuttern 5, 6 bei einer Verdrehung der Gewindespindel 4 in Axialrichtung bewegbare Kraftübertragungselement 14 ist somit über sein Führungsteil 16 und die Führungsbahnen 21 an dem Gehäuse 1 längsgeführt und seitlich abgestützt, so daß das Kraftübertragungselement 14 und die Spindelmuttern 5, 6 einerseits unverdrehbar gehalten und andererseits derart geführt sind, daß quer zur Bewegungsrichtung wirkende Kräfte nicht auf den Spindeltrieb übertragen werden können.

Das Gehäuse 1 ist im übrigen auf der dem Längsschlitz 12 abgewandten Seite der bei 22 angedeuteten, die Achse der Gewindespindel 4 enthaltenden Symmetrieebene 22 mit einem weiteren Paar paralleler und einander gegenüberliegender Führungsbahnen 21 versehen, die es gestatten — bei entsprechender Verlängerung des Führungsbügels 16 — entweder eine zusätzliche Längsführung des Kraftübertragungselementes 14 zu bewirken, oder diese Längsführung dadurch noch stabiler zu gestalten, daß die Abstützstellen des Führungsbügels 16 weiter von dem Längsschlitz 12 entfernt angeordnet sind.

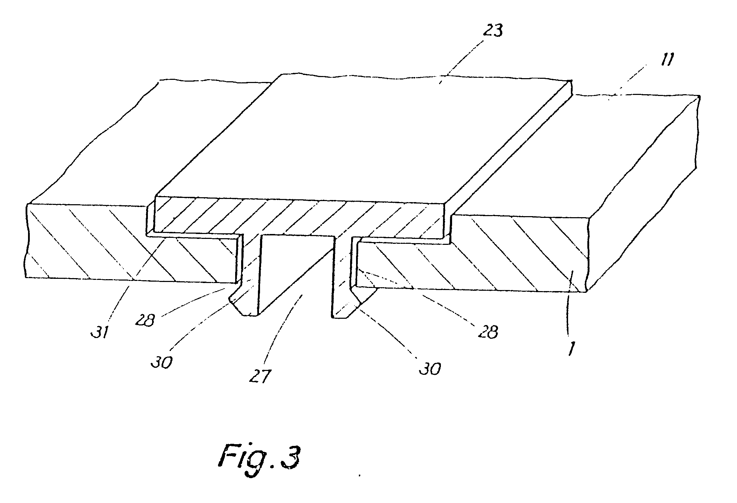

Der Längsschlitz 12 ist beidseitig des Kraftübertragungselementes 14 durch ein Verschlußelement verschlossen, das in Gestalt eines aus Kunststoff bestehenden flexiblen Abdeckbandes 23 ausgebildet ist, welches endseitig bei 24, 25 an den Lagerflanschen 2 und damit an dem Gehäuse 1 befestigt ist. Das Abdeckband 23 ist im Querschnitt etwa rechteckig (Fig. 3) und trägt auf einer Seite einen leistenartigen Halterungsansatz 27, der aus zwei im Abstand angeordneten parallelen Halterungsleisten 28 besteht, die in unmittelbarer Nähe der Längsschlitzberandung verlaufend angeordnet und endseitig mit angeformten leistenartigen Rastelementen 30 versehen sind, welche im Querschnitt eine etwa dreiecksförmige Gestalt aufweisen und in der aus Fig. 3 ersichtlichen Weise die innenliegenden Randkanten des Längsschlitzes 12 hintergreifen. Im übrigen liegt das eine glatte Oberfläche aufweisende Abdeckband 23 in einer entsprechenden Ausnehmung 31 im Bereiche der ebenen Fläche 11 des Gehäuses 1.

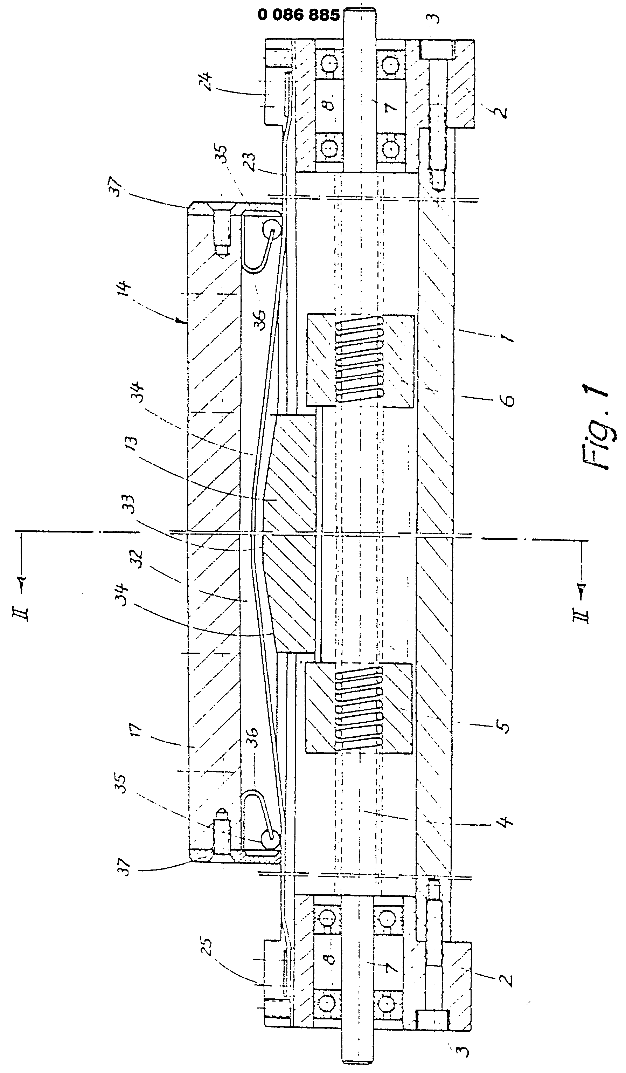

Das Kraftübertragungselement 14 weist oberhalb des stegartigen Teiles 13 und des Führungsteiles 16 eine kanalartige durchgehende Öffnung 32 auf, deren Boden im Bereiche zwischen den beiden Spindelmuttern 5, 6 in Gestalt einer Steuerfläche 33 ausgebildet ist, die beidenends schräg ansteigende, rampenartige Flächenteile 34 umfaßt (Fig. 1).

Im axialen Abstand von der Steuerfläche 33 sind bei dem in Fig. 1 in axialer Richtung verkürzt dargestellten Kraftübertragungselement 14 endseitig zwei auf das Abdeckband 23 jeweils einwirkende, an dem Teil 17 festgeschraubte Niederhalterfinger 37 vorgesehen, von denen jeder mit einer in der Durchgangsöffnung 32 in seiner unmittelbaren Nähe frei drehbar gelagerten Niederhalterrolle 35 zusammenwirkt, die auf einem Federarm 36 gelagert ist.

Das flexible Abdeckband 23 liegt auf der Steuerfläche 33 auf, die über den Gehäuseumriß im Bereiche des Längsschlitzes 12 radial vorragt, so daß das Abdeckband 23 in diesem Bereiche mit seinen Halterungsleisten 28 aus dem Längsschlitz 12 ausgehoben ist und den Durchgang des stegartigen Teiles 13 durch den Längsschlitz 12 gestattet. Die Niederhalterrollen 35 führen im Zusammenwirken mit den starren Niederhalterfingern 37 das ausgehobene Abdeckband 23 beidseitig der Steuerfläche 33 mit seinen Halterungsleisten 28 wieder in den Längsschlitz 12 ein, wo es durch die Rastelemente 30 elastisch verriegelt gehalten ist.

Wenn somit das Kraftübertragungselement 14 durch entsprechende Verdrehung der Gewindespindel 9 axial verschoben wird, wandert der durch die Steuerfläche 33 mit den Halterungsleisten 28 aus dem Längsschlitz 12 ausgehobene Längsbereich des Abdeckbandes 23 mit dem Kraftübertragungselement 14 mit, während beidseitig des Kraftübertragungselementes 14 der Längsschlitz 12 durch das Abdeckband 23 dicht verschlossen ist. ·

Bei der dargestellten Ausführungsform der Lineareinheit weist das Gehäuse 1 lediglich einen Längsschlitz auf. Es sind auch Ausführungsformen denkbar, bei denen mehrere solcher Längsschlitze vorhanden sind, durch die Teile des Kraftübertragungselementes oder mehrerer Kraftübertragungselemente nach außen ragen und die in entsprechender Weise jeweils durch ein Abdeckband 23 verschlossen sein können.

Die Niederhalterfinger 37 können die Breite des Gehäuses 1 aufweisen und auf der ebenen Fläche 11 entlanggleiten, so daß sie Abstreifer zugleich für das Gehäuse 1 und das Abdeckband 23 bilden. Damit wird verhindert, daß Verunreinigungen unter dem Kraftübertragungselement 14 eintreten und durch den dort offenen Längsschlitz 12 zu dem Spindeltrieb gelangen.

Das Gehäuse 1 kann auch zumindest teilweise mit Schmieröl gefüllt sein, um einen verschleißfreien Betrieb des Spindeltriebes zu gewährleisten und die Geräuschdämpfung noch zu verbessern. In diesem Falle ist das öldichte Gehäuse 1 endseitig im Bereiche der Lager 8 durch bekannte Dichtmittel abgedichtet.

## Patentansprüche

1. Mechanische Lineareinheit zur Erzeugung einer begrenzten Linearbewegung eines angetriebenen Kraftübertragungselementes, bei der in einem formstabilen länglichen Gehäuse (1) in Gestalt eines Profilrohres ein Spindeltrieb angeordnet ist, dessen Gewindespindel (4) in dem Gehäuse drehbar gelagert und mit einer Antriebsquelle kuppelbar ist, wobei das durch wenigstens eine Spindelmutter (5, 6) des Spindeltriebes angetriebene Kraftübertragungselement (14) durch einen Längsschlitz (12) des Gehäuses (1) nach außen ragend angeordnet an dem Gehäuse längsgeführt ist und das Gehäuse (1) endseitig durch angesetzte Lagerflansche (2) abgeschlossen ist, in denen Lager (8) für die Gewindespindel (4) angeordnet sind, dadurch gekennzeichnet, daß der Längsschlitz (12) des Gehäuses (1) beidseitig des Kraftübertragungselementes (14) durch ein den Längsschlitz (12) des Gehäuses (1) abdeckendes flexibles Abdeckband (23) verschlossen ist, das endseitig gegenüber dem Gehäuse (1) fixiert ist und wenigstens einen in den Längsschlitz (12) eingreifenden leistenartigen Halterungsansatz (27) aufweist und daß das Kraftübertragungselement (14) oder ein mit diesem verbundenes Teil (17) eine das Abdeckband (23) über einen begrenzten Längsbereich mit seinem Halterungsansatz (27) aus dem Längsschlitz (12) aushebende und das ausgehobene Abdeckband (23) vor bzw. hinter diesem Längsbereich mit seinem Halterungsansatz (27) in den Längsschlitz (12) eindrückende Schiebereinrichtung (33, 34, 35, 37) aufweist.

2. Lineareinheit nach Anspruch 1, dadurch gekennzeichnet, daß die Schiebereinrichtung eine das Abdeckband (23) aus dem Längsschlitz (12) aushebende, beidenends rampenartig ausgebildete Steuerfläche (33) aufweist, auf der das Abdeckband (23) in dem Längsbereich aufliegt und daß beiderseits der Steuerfläche (33) zwei auf das Abdeckband (23) einwirkende Niederhalter (37, 35) angeordnet sind.

3. Lineareinheit nach Anspruch 2, dadurch gekennzeichnet, daß die Niederhalter auf das Abdeckband (23) einwirkende Rollen (35) aufweisen.

4. Lineareinheit nach Anspruch 2 oder 3, dadurch gekennzeichnet, daß die Niederhalter in Gestalt starrer Niederhalterfinger (37) ausgebildet sind, die mit dem Kraftübertragungselement (14) verbunden sind und gegebenenfalls als Abstreiforgane wirken.

5. Lineareinheit nach einem der Ansprüche 2 bis 4, dadurch gekennzeichnet, daß die Steuerfläche (33) in einer das Kraftübertragungselement (14) durchdringenden, außerhalb des Gehäuses (1) liegenden Ausnehmung (32) ausgebildet ist.

6. Lineareinheit nach Anspruch 1, dadurch gekennzeichnet, daß das Halterungselement (27) angeformte leistenartige und mit dem Gehäuse (1) im Bereich des Längsschlitzes (12) zusammenwirkende Rastelemente (30) trägt.

7. Lineareinheit nach Anspruch 6, dadurch gekennzeichnet, daß das Halterungselement (27) zwei im Abstand angeordnete parallele Halterungsleisten (28) aufweist, die in unmittelbarer Nähe der Längsschlitzberandung verlaufend angeordnet sind.

8. Lineareinheit nach einem der vorhergehenden Ansprüche, dadurch gekennzeichnet, daß das Gehäuse (1) zu beiden Seiten des Längsschlitzes (12) auf seiner Außenseite wenigstens zwei parallele Führungsbahnen (21) trägt und daß das Kraftübertragungselement (14) ein das Gehäuse (1) bis auf die Höhe der Führungsbahnen (21) übergreifendes bügelartiges Führungsteil (16) aufweist, das seitlich gegen die Führungsbahnen (21) abgestützt ist.

9. Lineareinheit nach Anspruch 8, dadurch gekennzeichnet, daß das Gehäuse (1) auf seiner Außenseite auf der dem Längsschlitz (12) abgewandten Seite einer die Gewindespindelachse enthaltenden Ebene (22) liegende Führungsbahnen (21) trägt.

10. Lineareinheit nach einem der vorhergehenden Ansprüche, dadurch gekennzeichnet, daß das an dem Gehäuse (1) geführte Kraftübertragungselement (14) zwischen zwei Gewindemuttern (5, 6) des Spindeltriebes eingespannt ist.

## Claims

1. Mechanical linear unit for generating a limited linear movement of a driven force-transmission element, in which in an elongated housing (1) of stable form, in the form of a profiled tube, a spindle drive is arranged the threaded spindle (4) of which is mounted rotatably in the housing and couplable with a drive source, while the force-transmission element (14), driven by at least one spindle nut (5, 6) of the spindle drive, is arranged protruding to the exterior through a longitudinal slot (12) of the housing (1), and longitudinally guided on the housing, and the housing (1) is closed off at the ends by attached bearing flanges (2), in which bearings (8) for the threaded spindle (4) are arranged, characterised in that the longitudinal slot (12) of the housing (1) is closed off on both sides of the force-transmission element (14) by a flexible cover strap (23) covering the longitudinal slot (12) of the housing (1), which strap is fixed at the ends in relation to the housing (1) and comprises at least one strip-type retaining extension (27) engaging in the longitudinal slot (12), and in that the force-transmission element (14) or a part (17) connected therewith comprises a pusher device (33, 34, 35, 37) which lifts the cover strap (23), over a limited length, with its retaining extension (27) out of the longitudinal slot (12) and presses the lifted-out cover strap (23), before and/or behind this length, with its retaining extension (27) into the longitudinal slot (12).

2. Linear unit according to claim 1, characterised in that the pusher device comprises a control surface (33) of ramp-like formation at both ends which lifts the cover strap (23) out of the longitudinal slot (12), on which control surface the cover strap (23) rests in the length region and in that on both sides of the control surface (33) there are arranged two holding-down elements (37, 35) acting upon the cover strap (23).

3. Linear unit according to claim 2, characterised in that the holding-down elements comprise rollers (35) acting upon the cover strap (23).

4. Linear unit according to claim 2 or 3, characterised in that the holding-down elements are made in the form of rigid holding-down fingers (37) which are connected with the force-transmission element (14) and may act as scrape-off elements.

5. Linear unit according to one of claims 2 to 4, characterised in that the control surface (33) is formed in an aperture (32) penetrating the force-transmission element (14) and lying outside the housing (1).

6. Linear unit according to claim 1, characterised in that the retaining element (27) carries formed-on, strip-type detent elements (30) cooperating with the housing (1) in the region of the longitudinal slot (12).

7. Linear unit according to claim 6, characterised in that the retaining element (27) comprises two spaced parallel retaining strips (28) which are arranged extending in the immediate vicinity of the edging of the longitudinal slot.

8. Linear unit according to one of the preceding claims, characterised in that the housing (1) carries, on its outside on both sides of the longitudinal slot (12), at least two parallel guide tracks (21) and in that the force-transmission element (14) comprises an arch-type guide part (16) grasping over the housing (1) as far as the height of the guide tracks (21), which guide part is supported laterally against the guide tracks (21).

9. Linear unit according to claim 8, characterised in that the housing (1) carries on its outside guide tracks (21) lying on that side of a plane (22) containing the axis of the threaded spindle which is remote from the longitudinal slot (12).

10. Linear unit according to one of the preceding claims, characterised in that the force-transmission element (14) guided on the housing (1) is clamped in between two threaded nuts (5, 6) of the spindle drive.

## Revendications

1. Unité linéaire mécanique pour la production d'un mouvement linéaire limité d'un élément de transmission de force entraîné, dans laquelle, dans un bâti (1) oblong et indéformable ayant la forme d'un tube profilé, est installé un système d'entraînement à broche dont la broche filetée (4) est montée mobile en rotation dans le bâti et peut être accouplée à une source motrice, l'élément de transmission de force (14), actionné par au moins un écrou (5, 6) du système d'entraînement à broche, faisant saillie à l'extérieur à travers une fente longitudinale (12) du bâti (1) et étant guidé longitudinalement le long de celui-ci, et le bâti (1) étant fermé à ses extrémités par des brides rapportées (2) dans lesquelles sont disposés les paliers (8) supportant la broche filetée (4), caractérisée par le fait que la fente longitudinale (12) du bâti (1) est fermée des deux côtés de l'élément de transmission de force (14) par une bande de recouvrement flexible (23) qui, recouvrant la fente longitudinale (12) du bâti (1), est fixée à ses extrémités par rapport au bâti et comporte au moins un appendice de retenue (27) en forme de barre s'engageant dans la fente longitudinale (12) et que l'élément de transmission de force (14), ou un élément (17) relié à celui-ci, comporte un dispositif à coulisse (33, 34, 35, 37) qui, sur une zone longitudinale limitée, soulève la bande de recouvrement (23) pour extraire son appendice de retenue (27) de la fente longitudinale (12) et, en amont et en aval de cette zone, appuie sur la bande de recouvrement soulevée (23) pour l'enfoncer dans la fente (12) par son appendice de retenue (27).

2. Unité linéaire selon la revendication 1, caractérisée par le fait que le dispositif à coulisse comporte une surface de commande (33) qui est réalisée en forme de rampe à ses deux extrémités, soulève la bande de recouvrement (23) hors de la fente longitudinale (12) et sur laquelle vient s'appliquer la bande de recouvrement dans la zone longitudinale, et que des deux côtés de la surface de commande (33) sont disposés deux organes presseurs (37, 35) agissant sur la bande de recouvrement (23).

3. Unité linéaire selon la revendication 2, caractérisée par le fait que les organes presseurs comportent des rouleaux (35) agissant sur la bande de recouvrement (23).

4. Unité linéaire selon la revendication 2 ou 3, caractérisée par le fait que les organes presseurs sont réalisés sous la forme de doigts presseurs rigides (37) qui sont raccordés à l'élément de transmission de force (14) et font éventuellement office d'organes de râclage.

5. Unité linéaire selon l'une des revendications 2 à 4, caractérisée par le fait que la surface de commande (33) est réalisée dans un évidement (32) traversant l'élément de transmission de force (14) et situé à l'extérieur du bâti (1).

6. Unité linéaire selon la revendication 1, caractérisée par le fait que l'organe de retenue (27) porte des éléments d'encliquetage (30) en forme de moulures venus d'une seule pièce et coopérant avec le bâti (1) dans la zone de la fente longitudinale (12).

7. Unité linéaire selon la revendication 6, caractérisée par le fait que l'élément de retenue (27) comporte deux pattes de fixation parallèles (28) disposées à distance l'une de l'autre et à proximité immédiate des bords de la fente longitudinale.

8. Unité linéaire selon l'une des revendications précédentes, caractérisée par le fait que le bâti (1), des deux côtés de la fente longitudinale (12), porte sur sa face extérieure au moins deux chemins de guidage parallèles (21) et que l'élément de transmission de force (14) comporte un élément de guidage (16) en forme d'étrier qui coiffe le bâti (1) jusqu'à la hauteur des chemins de guidage (21) et s'appuie latéralement contre les chemins de guidage (21).

9. Unité linéaire selon la revendication 8, caractérisée par le fait que le bâti (1) porte sur sa face extérieure des chemins de guidage (21) qui sont placés sur le côté, opposé à la fente longitudinale (12), d'un plan (22) contenant l'axe de la broche filetée.

10. Unité linéaire selon l'une des revendications précédentes, caractérisée par le fait que l'élément de transmission de force (14) guidé sur le bâti (1) est enserré entre deux écrous (5, 6) du système d'entraînement à broche.

Fig. 1

0 086 885

Fig. 2

Fig.3